# EUROPÄISCHE PATENTSCHRIFT

(11) **EP 0 729 716 B1**
(45) Veröffentlichungstag und Bekanntmachung des Hinweises auf die Patenterteilung: **11.10.2000**
(21) Anmeldenummer: 96102408.0
(22) Anmeldetag: 17.02.1996
(51) Int. Cl.: A43B 7/12, A43B 9/18

(54) **Schuhwerk mit Laminateinbettung in Sohlenspritzmasse**
Footwear with laminate embedded in the sole moulding mass
Article chaussant ayant une structure en couches dans la masse de moulage de la semelle

(30) Priorität: 02.03.1995 DE 19507210; 08.04.1995 DE 19513412
(43) Veröffentlichungstag der Anmeldung: 04.09.1996
(73) Patentinhaber: Akzo Nobel N.V., 6824 BM Arnhem (NL)
(72) Erfinder: Pavelescu, Leviu-Mihai, D-44229 Dortmund (DE)
(74) Vertreter: Fett, Günter

(56) Entgegenhaltungen:
- EP-A- 0 544 270
- EP-A- 0 629 359
- EP-A- 0 679 347
- DE-A- 3 821 602

## Beschreibung

Die Erfindung betrifft ein wasserdichtes Schuhwerk mit einem Schaft zumindest aus einer Außenschicht und einem auf der Innenseite der Außenschicht angeordneten Laminat, das zumindest eine wasserdichte, wasserdampfdurchlässige Sperrschicht und eine Futterschicht enthält, sowie mit einer Laufsohle, wobei zumindest ein Teil des unteren Endbereichs der Außenschicht im wesentlichen senkrecht zu der Unterseite der Laufsohle ausgerichtet ist.

Schuhe wasserdicht und wasserdampfdurchlässig auszubilden, kann dadurch erreicht werden, daß auf der Innenseite der textilen oder lederartigen Außenschicht des Schafts eine z.B. mikroporöse oder homogene Membran angeordnet wird, die für Wasser undurchlässig, die jedoch aufgrund der Fußschwitzigkeit des Benutzers im Schuhwerkinnenbereich hervorgerufene Feuchtigkeit permeabel ist. So wird in der DE-OS 38 21 602 ein Schuhwerk mit Laminateinbettung beschrieben, mit einem Schaft aus einer Außenschicht und einem auf der Innenseite der Außenschicht angeordneten Laminat, das eine wasserdichte, wasserdampfdurchlässige mikroporöse Sperrschicht und eine Futterschicht enthält, mit einer an dem unteren Bereich des Schafts angespritzten wasserdichten Kunststoffsohle, wobei der untere Endbereich der Außenschicht im wesentlichen senkrecht zu der Unterseite der Laufsohle ausgerichtet ist. Der untere Bereich der Außenschicht wird durch ein poröses Material z.B. einen Abstandshalter gebildet, welcher von dem anzuspritzenden Kunststoffsohlenmaterial durchdringbar und welcher mit dem Futter und der Funktionsschicht vernäht ist.

Nach der Lehre dieser Druckschrift kann das flüssige Material der Kunststoffsohle beim Anspritzen an den Schaft durch den unteren porösen Bereich der Außenschicht hindurch bis zu der Funktionsschicht bzw. zu dem die Funktionsschicht enthaltenden Laminat gelangen. Dadurch soll erreicht werden, daß das angespritzte Kunststoffsohlenmaterial die Nahtlöcher der Verbindungsnaht zwischen einer Brandsohle, der Funktionsschicht und der Außenschicht abdichtet. Hierbei ist hingegen zu beobachten, daß das flüssige Kunststoffsohlenmaterial zwar in die Poren des unteren porösen Bereichs des Schafts und des Abstandshalters eindringen kann, jedoch findet sich insofern keinerlei Verbesserung gegen das Kriechen von Wasser im Schaftmaterial, da die hohe mechanische Belastung des Schuhwerks beim Abrollen auf Dauer zu einem Einreißen der Porenwand oder zumindest zu einem Abriß des Kunststoffsohlenmaterials von den Poren des Abstandshalters führen kann, wobei dadurch verständlicherweise die Beanspruchung der noch intakt verbliebenen Verbindungen zwischen dem Kunststoffsohlenmaterial und dem Abstandshalter vergrößert wird. Dabei zeigt sich, daß das in der Außenschicht bodenwärts gekrochene Wasser durch die durch Ein- oder Abriß hervorgerufenen Spalten und Risse im porösen Abstandshalter als auch in dem porösen Material der Außenschicht des Schafts aufgrund von Längsleitungseffekten in den Bereich zwischen Abstandshalter und Funktionsschicht zu kriechen vermag und schließlich über Nähte, die der gleichen mechanischen Beanspruchung und deren Folgen wie oben besprochen unterliegen, durch die Funktionsschicht in den Schuhinnenbereich wandert.

Das Kriechvermögen von Wasser wird hingegen bei diesem Stand der Technik unterschätzt, da immerzu zu beobachten ist, daß Wasser besonders verstärkt durch Kapillarkräfte als auch durch die sogenannte Dochtwirkung des Nahtguts bzw. der - fäden, mit welchen die die verschiedenen Schichten durchdringenden, als ideale Wasserbrücken dienenden Nahtlöcher versehen sind, in den Schuhinnenbereich zu wandern vermag.

Zudem ist festzustellen, daß insbesondere bei dem herkömmlichen Schuh, welcher im unteren Bereich des Schaftmaterials porös ausgebildet ist, die Seitenstabilität des Schuhs derart eingeschränkt wird, daß der Schuh des Benutzers beim Abrollen seitlich nach innen oder nach außen rutscht, dergestalt, daß eine hinreichende Trittsicherheit hierdurch nicht gewährleistet ist.

Ebenso beobachtet man, daß dieser Stand der Technik eine Vielzahl von Poren fordert für den unteren Bereich des Schaftes bzw. des Abstandshalters, wobei sich jedoch die Gefahr des Abrisses oder Einreißens verständlicherweise mit der Anzahl der Poren erhöht. Auch wird - statistisch gesehen - die Möglichkeit des Einreißens der Porenwand mit anwachsender Porenanzahl pro definierter Fläche umso größer wird, je mehr Poren pro definierter Fläche vorhanden sind. Hinzukommend ist das Schaftmaterial umso weniger belastbar, je stärker die Struktur des Schaftmaterials durch Durchlöcherung gestört ist, ein Umstand also, der zu vermeiden ist, um keine gesundheitlichen orthopädischen Schäden bei dem Benutzer bei dauernder Benutzung des Schuhwerks hervorzurufen.

Die herkömmliche Schuhausbildung hat jedoch gleichfalls herstellungstechnische Nachteile, da sie eine große Anzahl von Arbeitsschritten erfordert, die mit hoher Genauigkeit von Hand ausgeführt werden müssen und demnach erhöhte Kosten verursachen. Insbesondere sind dabei Arbeitsvorgänge wie exaktes Belegen der umgeschlagenen Endbereiche des Schaftmaterials mit dem Abstandshalter, genaues Ausrichten des Verbindungsmaterials oder Abstandshalters mit hinreichendem Abstand vom Laufsohlenrand, was die Massenherstellung dieses Schuhs umständlich, zeit- und arbeitsaufwendig macht. Hinzutretend ist es erforderlich, daß das löchrige Verbindungsmaterial am unteren Ende des Schafts faltenfrei, also derartig auszurichten, daß es auch in gekrümmten Bereichen, insbesondere im Fersen- und Fußspitzenbereich, flach aufliegen muß.
Der Erfindung liegt also die Aufgabe zugrunde, hier Abhilfe zu schaffen und die Nachteile des Stands der Technik zu beseitigen. Dabei soll ein Schuhwerk bereitgestellt werden, welches einfach und preiswert in der Herstellung ist sowie eine hohe Trittsicherheit beim Abrollvorgang und hinreichende dauernde Wasserdichtigkeit gewährt.

Außerdem sollte der Schuh die an ein Schuhwerk gestellten orthopädischen Anforderungen wie Fußbettgestaltung erfüllen aufgrund zusehends festzustellenden gesteigerten Gesundheitsbewußtseins der Benutzer auch im Bereich der Schuhorthopädie. Dabei ist es wünschenswert, wenn das Schuhwerk derart beschaffen ist, daß das durch Überbeanspruchung der Bänder und Muskeln zu beobachtende Absenken von Traggewölbe bzw. Verlust der lotrechten Statik des Fußes des Benutzers zumindest gelindert werden kann.

Die Lösung dieser Aufgaben besteht in einem Schuhwerk mit Laminateinbettung gemäß Anspruch 1. Die Unteransprüche betreffen bevorzugte Ausführungsformen des Erfindungsgegenstands.

Gegenstand der Erfindung ist somit ein wasserdichtes Schuhwerk mit Laminateinbettung mit einem Schaft zumindest aus einer Außenschicht und einem auf der Innenseite der Außenschicht angeordneten Laminat, das zumindest eine wasserdichte, wasserdampfdurchlässige Sperrschicht und eine Futterschicht enthält, sowie mit einer Laufsohle, wobei zumindest ein Teil des unteren Endbereichs der Außenschicht im wesentlichen senkrecht zu der Unterseite der Laufsohle,und der untere Endbereich 2' des Laminats 2 im wesentlichen parallel zu der Unterseite der Laufsohle 7 ausgerichtet ist, die zum Schuhwerkinnenbereich zugewandte Oberfläche des unteren Endbereichs 2' des Laminats 2 mit der zum Schuhwerkinnenbereich zugewandten, zu der Unterseite der Laufsohle 7 im wesentlichen parallelen Oberseite der Laufsohle 7 eine stete Fläche 8 bildet und die Sperrschicht des Laminats 2 in dem zu der Unterseite der Laufsohle 7 im wesentlichen parallel ausgerichteten unteren Endbereich 2' des Laminats 2 und an der Endkante des Laminats 2 mit der Laufsohle 7 wasserdicht verbunden ist, wobei der untere Endbereich 1' der Außenschicht 1 mit dem Laminat 2 ausschließlich über die Laufsohle 7 verbunden ist.

Bei der Herstellung dieses Schuhwerks wird der Schaft mit der Außenschicht 1 und dem auf der dem Schuhwerkinnenbereich zugewandten Seite - also Innenseite - der Außenschicht 1 angeordneten Laminat 2 auf den Leisten gelegt, wobei der untere Endbereich 2' des Laminats 2 auf den Leisten geschlagen wird. In einer Ausführungsform sind hierbei das Laminat 2 mit der Außenschicht 1 mit Hilfe eines herkömmlichen Klebers, welcher vorzugsweise wasserdampfdurchlässig ist, miteinander verbunden. Hierbei wird nun die Laufsohle 7 an den Leisten derartig unter Druck angespritzt, daß die zum Leisten zugewandte Oberfläche des unteren Endbereichs 2' des Laminats 2 mit der zum Leisten zugewandten Oberfläche der angespritzten Laufsohle 7 eine stete Fläche bildet.

Die Herstellung dieses Schuhwerks kann auch derart erfolgen, daß mit dem unteren Endbereich 2' des Laminats 2 ein textiles Flächengebilde 11 oder eine Brandsohle verbunden wird, wobei jedoch die Verbindung derart ausgeführt wird, daß der untere Endbereich 2' des Laminats 2 und die Außenkanten des textilen Flächengebildes 11 bzw. der Brandsohle voneinander derart beabstandet sind, daß das Sohlenmaterial in den Abstand zwischen dem unteren Endbereich 2' des Laminats 2 und die Außenkanten des textilen Flächengebildes 11 bzw. der Brandsohle beim Anspritzen der Laufsohle eindringen kann und so im

Abstandsbereich mit dem unteren Endbereich 2' des Laminats 2 eine stete Fläche bilden kann, die durch das textile Flächengebilde 11 bzw. der Brandsohle zur Mitte des Schuhwerks hin fortgesetzt wird.

Stete Fläche bedeutet, daß keine Erhebungen, Ausbuchtungen, Dellen oder Einbuchtungen im Übergangsbereich 8 zwischen der Oberfläche des Laminats 2 und der Oberfläche der Laufsohle 7 zu finden sind, die zu unerwünschten Druckstellen bei Benutzung des erfindungsgemäßen Schuhwerks durch den Benutzer führen könnten, so daß folglich der Übergang 8 als glatte Fläche ausgestaltet ist. Sonach kann auf eine Brandsohle verzichtet werden, was die Herstellungskosten des erfindungsgemäßen Schuhwerks wegen des Verzichts auf einen Arbeitsschritt, nämlich auf das Verlegen der Brandsohle, als auch aufgrund der Materialeinsparung im Gegensatz zum Stand der Technik senkt.

In einer bevorzugten Ausführungsform kann der untere Endbereich 2' der Sperrschicht des Laminats 2 im wesentlichen parallel zu der Unterseite der Laufsohle ausgerichtet sein sowie die zum Schuhwerkinnenbereich zugewandte Oberfläche des unteren Endbereichs 2' des Laminats 2 mit der zum Schuhwerkinnenbereich zugewandten, zur Laufsohlenunterseite im wesentlichen parallelen Oberseite der Laufsohle 7 eine stete Fläche bilden. Diese Ausgestaltung ruft auch aufgrund der nachfolgend heiß angespritzten mit der Sperrschicht innig verklebten Kunststoffsohle eine gute Seitenführung des Schafts und damit ausreichende Trittsicherheit hervor.

Außerdem ermöglicht das erfindungsgemäße Schuhwerk auf einfache Weise, durch eine entsprechende Leistenoberflächenausbildung beim Anformen der anzuspritzenden Laufsohle 7 ein Fußbett auszubilden, das orthopädischen Anforderungen genügt.

Im Gegensatz zum Stand der Technik besteht bei dem erfindungsgemäßen Schuhwerk nicht die Gefahr, daß Risse oder Spalten im unteren Endbereich des Schaftmaterials entstehen können, die ansonsten durch die durch hohe Porösität bedingte mangelnde innere Festigkeit des Schaftmaterials leicht entstehen können.

Der untere Endbereich der Futterschicht kann ebenfalls im wesentlichen senkrecht zu der Unterseite der Laufsohle 7 ausgerichtet sein, so daß die gesamte dem Schuhwerkinnenbereich zugewandte Fläche mit einer Einlegesohle verdeckt gepolstert werden kann, was den Tragekomfort des erfindungsgemäßen Schuhwerks steigert und die Verwendung von, falls erforderlich, wärmender Einlegesohle ermöglicht.

Es hat sich außerdem von Vorteil erwiesen, daß bereits die Verklebung bzw. Haftung zwischen dem unteren Endbereich 2' , insbesondere der Endkante, des Laminats 2 mit dem Kunststoffsohlenmaterial dergestalt dichtend ist, daß dem Wasser, falls es tatsächlich in der Außenschicht bodenwärts gekrochen ist, keine Wege eröffnet werden, in den Schuhwerkinnenbereich zu gelangen, weil im Vergleich zu herkömmlichen o.g,. Schuhen keine Nähte vorhanden sind, welche aufgrund des Fehlens der herkömmlicherweise durch das Nahtgut oder die -fäden hervorgerufenen Dochtwirkung als ideale Wasserleitungsbahnen das Wasser im unteren Endbereich der Außenschicht in den Schuhinnenbereich geradewegs wandern zu lassen.

Das erfindungsgemäße Schuhwerk zeigt sich als überlegen, da durch den Arbeitsvorgang des über den Leistenziehens des Schaftmaterials und Umschlagens des Laminats 2 und Anspritzens des Kunststoffsohlenmaterials das erfindungsgemäße Schuhwerk mit hohem Tragekomfort auf preiswerte Weise herstellbar ist und unter Massenherstellungsbedingungen ein Schuhwerk bereitgestellt wird, welches hinreichend wasserdicht ist, eine durch Fehlen porösen Schaftmaterials ausreichende Seitenstabilität gewährleistet und sogar noch orthopädische Fußbettanpassung an das Längs- und Quergewölbe des Fußes eines Benutzers ermöglicht.

Vorteilhaft ist zugleich das Oberflächenbehandeln der dem Schuhwerkinnenbereich abgewandten Seite - also außenseitig - der Außenschicht 1, zumindest in dem Bereich, welcher beim Aufspritzen des Kunststoffsohlenmaterials oder Ankleben der Kunststoffsohle 7 bedeckt wird. Das auf diesen Bereich angespritzte Kunststoffsohlenmaterial wird auch Dichtlippe genannt. Eine Oberflächenbehandlung kann z.B. durch mechanisches oder chemisches Aufrauhen oder Aufscheuern des als Außenschicht 1 verwendeten Leders bzw. der lederartigen oder textilen Schicht erfolgen. Dadurch erhöht sich nicht nur die Haftung oder Klebung der Außenschicht 1 mit der Sohle 7 sondern ebenso durch die sonach verringerte Anzahl von unverklebten Fehlstellen die Wasserdichtheit der Verbindung von Außenschicht 1 mit Sohle 2.

Um die Herstellungsweise des erfindungsgemäßen Schuhwerks zu vereinfachen und ein paßgenaues Anpassen an die Leistenoberfläche zu erreichen, ist es möglich, daß das erfindungsgemäße wasserdichte Schuhwerk eine angespritzte Laufsohle 7 aufweist, wobei die Außenschicht 1 in ihrem unteren Endbereich 1' ein Mittel zur Formgebung des unteren Bereichs der Außenschicht 1 im Bereich der Laufsohle 7 umfaßt, welches mit der Außenschicht 1 verbunden ist.

Vorzugsweise kann das Mittel zur Formgebung im Spitzenbereich oder in einem Teil des Spitzenbereichs nämlich im Frontbereich angeordnet sein. Zusätzlich oder alternativ ist es ebenso möglich, daß das Mittel zur Formgebung im Gelenkbereich des erfindungsgemäßen Schuhwerks ausgebildet ist.

Spitzenbereich ist der Bereich von der Schuhspitze bis zur der Stelle, an welcher das zu der Fußspitze des Benutzers gerichtete Ende der Fersenverstärkung angeordnet ist, welches in der Regel als Gelenkbereich des Schuhwerks bezeichnet wird.

Der Gelenkbereich ist der Bereich, welcher sich dem Spitzenbereich anschließt und an der das zu der Fußspitze des Benutzers gerichtete Ende der Fersenverstärkung angeordnet ist. Der Gelenkbereich stellt im wesentlichen den Bereich von Keilbein und Kahnbein dar.

Insbesondere zeigt sich von Vorzug, wenn das Mittel zur Formgebung eine Verlängerung 13 ist. Hierbei kann die Verlängerung 13 der zum Schuhwerkinnenbereich umgeschlagene unteren Endbereich 1' der Außenschicht 1 sein. Möglich ist es, die Verlängerung 13 zum Schuhwerkinnenbereich oder zum Schuhwerkaußenbereich umzuschlagen. Im Falle des Umschlagens der Verlängerung 13 zum Schuhwerkinnenbereich ist die Verlängerung 13, vorzugsweise im wesentlichen senkrecht zu der Unterseite der Laufsohle 7, mindestens einmal eingeschnitten. Dabei ist zu beobachten, daß beim flächigen Anlegen der Verlängerung 13 an die der Schuhwerkinnenbereich zugewandten Seite des unteren Bereichs der Außenschicht 1 die Flächen der Verlängerung 13 beidseitig des vorzugsweise in der Frontspitze angeordneten Einschnitts sich überlappen würden. Da ein derartiges Überlappen der Flächen möglicherweise Druckstellen (Clavus) am Fuß des Benutzers hervorzurufen vermag, was zu schmerzhaften Hornschichtverdickungen (Hyperkeratose) führen könnte, werden die sich überlappenden Flächen derart abgeschnitten, daß die Kanten des Ausschnitts 14 im Schräg- oder Stumpfstoß anliegen. Die Kanten sind bevorzugt nach außen umgeschlagen und miteinander vernäht. Wichtig ist, daß die umgeschlagene Verlängerung auf der dem Schuhwerkinnenbereich zugewandten Seite möglichst flach anliegt. Die nach außen umgeschlagenen und vernähten Teile bringen im Spitzenbereich den notwendigen Halt zur Formgebung und sind im fertigen Schuh in das Sohlenmaterial eingebettet.

Unter unterem Bereich der Außenschicht ist der Bereich der Außenschicht 1 zu verstehen, welcher sich von dem von dem Kunststoffsohlenmaterial als Dichtlippe verdeckten Bereich der Außenschicht in die zum oberen, zum Benutzer zugewandten Schaftende entgegengesetzte Richtung erstreckt.

Hinzukommend ist auch möglich, daß bei den oben erwähnten oder nachfolgend offenbarten Ausführungsformen des erfindungsgemäßen Schuhwerks mehr als ein Ausschnitt erfolgen kann. Der Ausschnitt 14 befindet sich vorzugsweise in der Frontspitze des Schuhwerks, der oder die Ausschnitte können jedoch auch an dem dem Frontbereich anschließenden Seitenbereich des Schuhwerks angeordnet sein.

Unter Frontspitze ist der Bereich des Spitzenbereichs zu verstehen, welcher der vorderste Teil des Spitzenbereichs des Schuhwerks ist.

Die Verlängerung 13 kann mit dem unteren Bereich der Außenschicht 1 fest verbunden, z.B. verklebt oder vernäht, sein. Auch ist es für die Statik des erfindungsgemäßen Schuhwerks von Vorteil, wenn die im Bereich des Ausschnitts 14 anliegenden Kanten der Verlängerung 13 miteinander vernäht sind.

Im Falle des Umschlagens der Verlängerung 13 zum Schuhwerkaußenbereich ist die Verlängerung 13, vorzugsweise im wesentlichen senkrecht zu der Unterseite der Laufsohle 7, eingeschnitten. Hierbei kann gleichfalls die flächig an der zum Schuhwerkinnenbereich abgewandte Seite der Außenschicht 1 anliegende Verlängerung 13 mit derselben verklebt sein. Die auseinanderklaffenden Kanten des Ausschnitts 14 können auch über ein textiles Verbindungsstück verbunden, z.B. vernäht, sein.

Die Verlängerung wird vorzugsweise im Frontbereich des erfindungsgemäßen Schuhwerks angeordnet.

Unter Frontbereich ist derjenige Bereich des Spitzenbereichs zu verstehen, welcher sich zu beiden Seiten an die Frontspitze anschließt und den im wesentlichen bogenförmigen Bereich des Spitzenbereichs darstellt, der den Zehen des Fußes des Benutzers anliegt.

Als Mittel zur Formgebung des erfindungsgemäßen Schuhwerks eignet sich insbesondere im Gelenkbereich ein textiles Flächengebilde 15, welches von dem Kunststoffsohlenmaterial der Laufsohle 7 durchdrungen ist. Das textile Flächengebilde 15 z.B. Vlies, Filz, Wirkware, Gewebe, Gewirke etc. kann bevorzugterweise mit dem unteren Endbereich 1' der Außenschicht 1, welcher vorzugsweise senkrecht oder parallel zu der Unterseite der Laufsohle 7 ausgerichtet ist, verbunden beispielsweise vernäht sein. Es zeigt sich bei dieser Ausführungsform, daß gerade durch die im Gelenkbereich angeordnete, durch das Mittel zur Formgebung bedingte besondere Fixierung der die Form und Fassung des Schuhwerks mitverleihende Außenschicht 1 die Fehlstellung und das Einsinken von Traggewölbe des Benutzerfußes mit einer als Fußbett ausgestalteten Laufsohlenoberseite vermindert und den Verlust der lotrechten Statik des Benutzerfußes zumindest einschränkt.

Ebenso kann das Mittel zur Formgebung im Gelenkbereich als eine Führungsschlaufe 5 zum Führen einer in der Führungsschlaufe sich befindlichen Zugschnur 6 ausgestaltet ist. Eine Führungsschlaufe 5 kann beispielsweise am unteren Endbereich 1' der Außenschicht 1 angeordnete Naht oder eine an dem unteren Endbereich 1' der Außensschicht 1 angenähte Schlaufe sein. Hierbei wird ganz bevorzugt,daß der sich im Gelenkbereich sich erstreckende untere Endbereich 1' der Außenschicht 1 zum Schuhwerkinnenbereich oder zum -außenbereich hin unter Bildung einer eine Zugschnur 6 führenden Führungschlaufe 5 um- oder eingeschlagen und mit anliegender Außenschicht verklebt und / oder vernäht wird. Das mit Außenschicht 1, Laminat 2, Führungschlaufe versehene Schaftmaterial werden bei der Herstellung des erfindungsgemäßen Schuhwerks über den mit Trennschicht versehenen Leisten gezogen, die Zugschnur 6 durch die Führungsschlaufe geführt und die beiden Enden der Zugschnur 6 derart verknotet, daß beim Anspritzen des flüssigen Kunststoffsohlenmaterials der Knoten im Gelenkbereich von demselben umbettet wird, so daß der Konoten allseitig verdeckt ist und den Tragekomfort nicht beinträchtigt.

Hinzukommend ist festzustellen, daß herkömmlicherweise die bei Verwendung von Einlagen zu beobachtende starke seitliche Beanspruchung der Außenschicht durch die Einlagen beim Abrollen des Fußes oder das im Laufe der Benutzung nachfolgende seitliche, senkrecht zu der Sohlenlängsachse erfolgende Ausdriften der Außenschicht bzw. Schaftmaterials aufgrund von örtlich begrenzter Überbeanspruchung der Außenschicht bzw. Schaftmaterials bei dem erfindungsgemäßen Schuhwerk hingegen durch die bereits als Fußbett gestaltete Oberseite der Laufsohle 7 und / oder durch das insbesondere im Gelenkbereich angeordnete Mittel zur Formgebung verhindert zumindest hinreichend hinausgezögert wird.

Unter Laufsohlenoberseite ist die dem Schuhwerkinnenbereich - also Schuh- werkinnenraum - zugewandte Seite der Laufsohle 7 zu verstehen.

Von Vorteil ist das Mittel zur Formgebung das z.B. als eine Führungsschlaufe 5 zum Führen einer in der Führungsschlaufe sich befindlichen Zugschnur 6 ausgestaltet ist. Eine Führungsschlaufe 5 kann beispielsweise eine Naht oder eine angenähte Schlaufe sein. Hierbei wird ganz bevorzugt, den unteren Endbereich 1' der Außenschicht 1 zum Schuhwerkinnenbereich oder zum -außenbereich hin um- oder einzuschlagen und mit benachbartem Außenschichtbereich z.B. zu vernähen oder zu verkleben.

Bei der Herstellung des erfindungsgemäßen Schuhwerks wird der Schaft auf den Leisten gezogen und mit Hilfe der durch z.B. die Führungsschlaufen 5 laufenden Zugschnur 6 um den Leisten herum derart zusammengezogen, daß der Schaft sich paßgenau der Oberfläche des Leistens anpaß. Nach Auftragen eines Trennmittels auf die noch verbliebene unverdeckte Leistenoberfläche erfolgt das Anspritzen des flüssigen Kunststoffsohlenmaterials von unten an den Leisten, wodurch eine sehr hohe Ausformung der zum Schuhwerkinnenbereich zugewandten Oberfläche der Laufsohle 7 bzw. Anpassung der Laufsohle 7 an die Oberfläche des Leisten ermöglicht wird zur Bereitstellung eines mit einem orthopädisch hinreichend gestalteten Fußbett in wenigen Herstellungsschritten produzierten wasserdichten erfindungsgemäßen Schuhwerks.

Noch mehr bevorzugt erweist sich ein textiles Flächengebilde 9, 11 als Mittel zur Formgebung, welches von dem Kunststoffsohlenmaterial der Laufsohle 7 durchdrungen ist. Das textile Flächengebilde kann Vlies, Filz, Wirkware, Gewebe, Gewirke etc. sein. Überdies ist diese Ausführungsform von Nutzen, da aufgrund der dadurch bedingten Auftrittsstabilität und Seitenstabilität eine ausgeglichene Statik des erfindungsgemäßen Schuhwerks erreicht wird, welche ein einwandfreies Abrollen des Fußes gewährleistet und aufgrund der fehlenden Verwendung von unporösen Schaftmaterialien - ohne Eingriff in deren inneren Strukturen - eine hohe Belastbarkeit insbesondere bei der raschen stoßartigen Beanspruchung der Laufsohle erlaubt, welche häufig bei Sportschuhen auftritt.

Die ausreichende Seitenstabilität wird hinzutretend dadurch noch gesteigert, daß vorzugsweise im Spitzenbereich der Laufsohle 7 der untere Endbereich der Außenschicht 1 mit dem textilen Flächengebilde 9 vernäht ist. Gerade bei Schuhwerk, welches sehr hoher Beanspruchung insbesondere der Fußseitenführung unterliegt, wie Berg-, Wanderstiefel, Sportschuhe, kann die Seitenstabilität auch dadurch erhöht werden, daß der untere parallel der Unterseite der Laufsohle 7 ausgerichtete Endbereich 2' des Laminats 2 mit einem separaten textilen Flächengebilde 11 gekoppelt, z.B. vernäht, ist. Hinzukommend ist festzustellen, daß die Seitenstabilität dieser Ausführungsform des erfindungsgemäßen Schuhwerks zusammen mit der besseren Haftung von seitlich angeklebter oder angespritzter Laufsohle 7 und z.B. Anbringen von Fersenkappen 3 sich deutlich erhöht, so daß das erfindungsgemäße Schuhwerk das beim Knick-Senkfuß zu beobachtende Knicken des Fersenbeins infolge Senken des inneren Längsgewölbes und damit einhergehend das seitwärts gerichtete Rutschen des Fußes des Benutzers beim Auftreten je nach Deformität - e.g. nach außen oder nach innen - hilfreich gegenstützen kann.

Dabei ist festzustellen, daß auch hierbei es sich bereits als genügend erwiesen hat, wenn das textile Flächengebilde 9, 11 lediglich im Spitzenbereich mit dem unteren Endbereich des Laminats fest verbunden ist.
Zudem kann die Seitenstabilität bei Schuhwerken mit hoher Beanspruchung noch durch das Anbringen von Hinterkappen 3 oder Seitenkappen, welche außen auf der Außenschicht 1 geklebt und / oder vernäht anliegen können oder zwischen der Außenschicht 1 und dem Laminat 2 geklebt und / oder vernäht angeordnet sind, gesteigert werden.

Die zur Herstellung von herkömmlichen Schuhen erforderlichen zeit- und arbeitsintensiven Schritte wie Auflegen, Ausrichten und faltenfreies Flachlegen des Abstandshalters- gerade in den kritischen Zonen wie an der Fußspitze und im Fersenbereich - auf das umgeschlagene Schaftmaterial, Perforieren von Schaftmaterial etc., wodurch die Herstellungskosten des herkömmlichen Schuhs sich merklich erhöhen, entfallen bei der Produktion des erfindungsgemäßen Schuhwerks dadurch, daß lediglich nach dem Aufziehen des Schaftmaterials und einfachem Auflegen des unteren Endbereichs des Laminats auf den Leisten ein Anspritzen oder Ankleben der Kunststoffsohle erfolgt. Dadurch wird außerdem gewährleistet, den ungünstigen Umstand bei dem herkömmlichen Schuh zu umgehen, daß die bei den herkömmlichen Schuhen massenherstellungsweise bedingten, durch faltiges Auslegen der Abstandshalter hervorgerufenen Verbindungsfehlstellen in der Verklebungszone mangelnde Wasserdichtigkeit hervorrufen.

Da das erfindungsgemäßen Schuhwerk ein Laminat 2 enthält, welches eine wasserdichte, aber wasserdampfdurchlässige Sperrschicht aufweist, zeichnet sich das erfindungsgemäße Schuhwerk hinzukommend durch einen hohen Tragekomfort aus, weil die durch die Fußschwitzigkeit hervorgerufene Feuchtigkeit ohne weiteres vom Schuhwerkinnenbereich nach außen transportiert wird. Hierbei kann die Sperrschicht eine Stützschicht z.B. ein textiles Flächengebilde wie Vlies, Filz, Wirkware, Gewebe, Gewirke sein, welches vorzugsweise mit dem wasserdichten wasserdampfdurchlässigen Material beschichtet oder getränkt sein kann. Die Sperrschicht kann auch neben einer oder mehreren Stützschichten zumindest eine Membran aus dem wasserdichten wasserdampfdurchlässigen Material enthalten.

Zur Herstellung des wasserdichten wasserdampfdurchlässigen Materials kann man verwenden die zur Formung einer mikroporösen polymeren Matrix geeigneten Polymere, welche umfassen Polyolefine, wie Polyethylen-Propylen-Copolymere, Polyethylen, Terephthalate, Polycaprolactam, Polyvinylidenfluorid, Polybutylenterephthalat, Polyestercopolymere und Polytetrafluorethylen. Das wasserdichte wasserdampfdurchlässigen Material kann eine Beschichtung oder Tränkung oder eine Membran mit Polymeren auf Copolyetherester-Grundlage sein oder aus gerecktem Polytetrafluorethylen vorzugsweise mit einer mikroporösen Polyurethan-Beschichtung (Gore-tex) sein. Hierbei haben sich aufgrund seiner hohen feuchtigkeitsdurchlässigen Eigenschaften und hohen Wasserdichtigkeit und Strapazierfähigkeit als Material Polymere auf Copolyetherestergrundlage (Sympatex) als ausgezeichnet erwiesen.

Vorzugsweise werden als wasserdichtes wasserdampfdurchlässige Material Polymere auf Copolyetherestergrundlage (Sympatex) verwendet. Die Copolyetherester können aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 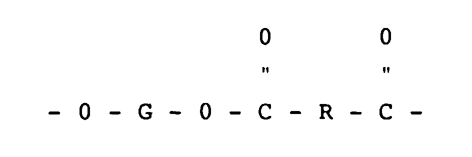 und die kurzkettigen Estereinheiten der Formel 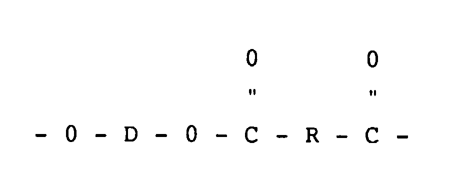 entsprechen, worin G einen zweiwertigen Rest darstellt, der nach der Entfernung von endständigen Hydroxylgruppen aus mindestens einem langkettigen Glykol eines mittleren Molekulargewichts von 600 bis 6 000 und eines Atomverhältnisses von Kohlenstoff zu Sauerstoff zwischen 2,0 und 4,3 zurückbleibt, wobei mindestens 20 Gew.% des langkettigen Glykols ein Atomverhältnis von Kohlenstoff zu Sauerstoff zwischen 2,0 und 2,4 besitzen und 15 bis 50 Gew.% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt, und D einen zweiwertigen Rest darstellt, der nach der Entfernung von Hydroxylgruppen aus mindestens einem Diol eines Molekulargewichts von weniger als 250 zurückbleibt, wobei mindestens 80 Mol % der verwendeten Dicarbonsäure aus Terephthalsäure oder ihren esterbildenden Äquivalenten und zumindest 80 Mol % des Diols mit dem kleinen Molekulargewicht aus 1,4-Butandiol oder dessen esterbildenden Äquivalenten bestehen, die Summe der Molprozente der Dicarbonsäure, die keine Terephthalsäure oder deren esterbildenden Äquivalente darstellt, und des Diols mit einem kleinen Molekulargewicht, das kein 1,4-Butandiol oder dessen esterbildenden Äquivalente darstellt, höchstens 20% beträgt und die kurzkettigen Estereinheiten 40 - 80 Gew.% des Copolyetheresters betragen.

Vorzugsweise können die Polymere ganz oder teilweise Copolyetherester sein, worin mindestens 70 Mol % der verwendeten Dicarbonsäure 2,6-Naphthalindicarbonsäure oder deren Ester bildenden Äquivalente sind und bei dem mindestens 70 Mol.% des verwendeten Diols mit einem kleinen Molekulargewicht 1,4-Butandiol oder dessen esterbildenden Äquivalente ist und die Summe der Molprozente der Dicarbonsäure, die keine 2,6-Naphthalindicarbonsäure oder deren Ester bildende Äquivalente ist und des Diols mit einem kleinen Molekulargewicht, das kein 1,4-Butandiol oder dessen Ester bildende Äquivalente ist, höchstens 30% beträgt und die Estereinheiten mit kurzen Ketten 35 bis 80 Gew.% des Copolyetheresters ausmachen.

Noch mehr bevorzugt sind die Polymere, die Copolyetherester sind, worin die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 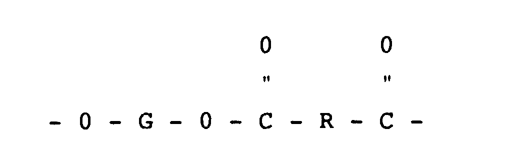 und die kurzkettigen Estereinheiten der Formel 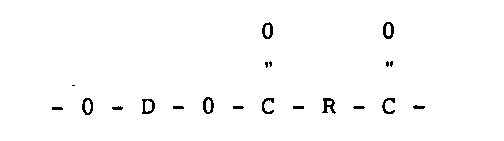 entsprechen, wobei G einen zweiwertigen Rest darstellt, der nach der Entfernung von endständigen Hydroxylgruppen aus mindestens einem langkettigen Glykol eines mittleren Molekulargewichts von 600 bis 4 000 und eines Atomverhältnisses von Kohlenstoff zu Sauerstoff zwischen 2 und 4,3 zurückbleibt, wobei mindestens 20 Gew.% des langkettigen Glykols ein Atomverhältnis von Kohlenstoff zu Sauerstoff zwischen 2,0 und 2,4 besitzen und 15 bis 50 Gew.% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt und D einen zweiwertigen Rest darstellt, der nach der Entfernung von Hydroxylgruppen aus mindestens einem Diol eines Molekulargewichts von weniger als 250 zurückbleibt, wobei mindestens 70 Mol % der verwendeten Dicarbonsäure aus 2,6-Naphthalindicarbonsäure oder ihrer esterbildenden Äquivalente besteht und mindestens 70 Mol % des Diols mit dem kleinen Molekulargewicht aus 1,4 Butandiol oder dessen esterbildenden Äquivalenten besteht und die Summe der Mol % von der Dicarbonsäure, die keine 2,6-Naphthalindicarbonsäure oder ihrer esterbildenden Äquivalente ist und des Diols mit einem kleinen Molekulargewicht, das kein 1,4-Butandiol oder dessen esterbildende Äquivalente ist, höchstens 30 % beträgt und die Estereinheiten mit kurzen Ketten 35 bis 80 Gew.% des Copolyetheresters betragen.

Die in einer weiteren Ausführungsform verwendeten Copolyetheresterpolymer-Membranen können eine Dicke von 10 µm oder 15 µm aufweisen und zeichnen sich durch eine hohe Wasserdampfdurchlässigkeit von über 2700 g/m² (24 Stden. nach ASTM E 96 66 Methode B modifiziert) aus.

Als Futterschicht kann eine Frotteeschicht, Ziegen-, Schaf-, Rind-, Schweinslederfutterschicht, Samtschicht, Kamelhaarstoffschicht, gestrickte oder gewebte Fellschicht, Gewebeschicht, vorteilhafterweise aus Baumwolle, Schurwolle, synthetische Fasern und / oder regenierter und/oder modifizierter Cellulose verwendet werden.

Die Außenschicht 1 kann mindestens ein Vertreter der eine Lederschicht, Textilschicht, textilartige Schicht und Gewebe umfassende Gruppe sein. Möglich sind für die Außenschicht als Obermaterial Segeltuch, Stoffe, Chintz, Everglaze, Frottierware, Samt, Manchester, Kord, Velveton, Norzon, Ledertuch, Ledersamt, Duvertine, gestricktes oder gewirktes Gewebe, Satin, Fell, Fellimitation, Rauh-, Glatt-, Lackleder oder geschliffenes, geprägtes, geschrumpftes oder gekrispeltes Leder.

Zur Verklebung von Außenschicht 1 mit dem Laminat 2 eignen sich hydrophile Kleber, da sie den Wasserdampftransport nicht behindern, wie hydrophile geschäumte Kleber auf Polyurethan- oder Acrylatgrundlage. Ebenso sind Heißverklebungen möglich.

Als Kunststoffsohlenmaterialien sind wasserdichte geeignet wie Gummi, Polyurethan, Polyvinylchlorid und deren Derivate und Mischungen derselben.

Zudem zeigt es sich in einer vorteilhafte Ausführungsform, daß z.B. zwischen der Sperrschicht und der Außenschicht 1 eine wärmedämmende Isolationsmaterialschicht aufgebracht sein kann, welche wasserdampf- und luftdurchlässig aufgrund ihrer Porösität ist.

Die o. g. Nachteile des Stands der Technik wie eingeschränkte Flexibilität, unzureichende Abrolleigenschaften, hohe Herstellungskosten und großer Zeitaufwand bei der Herstellung werden sonach durch das erfindungsgemäße Schuhwerk für den Fachmann unerwarteterweise in einer ausgewogenen Weise sonach gleichzeitig zumindest stark reduziert.

### Ausführungsbeispiele

Weitere Einzelheiten, Aspekte und Vorteile der vorliegenden Erfindung ergeben sich aus der nachfolgenden Beschreibung unter Bezugnahme auf die Zeichnungen. Es zeigen aufgrund einer zeichnerischen Vereinfachung in schematischer, stark vergrößernder Weise ohne Anspruch auf eine maßstabsgetreue Wiedergabe
- Fig. 1: den Querschnitt durch ein erfindungsgemäßes Schuhwerk mit aufgespritzter Laufsohle und mit Außenschicht verklebtem Laminat
- Fig. 2: die Unteransicht des erfindungsgemäßen Schuhwerks mit Führungsschlaufe ohne Laufsohle
- Fig. 3: Ansicht auf den Querschnitt A-A von Fig. 2 im Spitzenbereich des erfindungsgemäßen Schuhwerks
- Fig. 4: die Unteransicht des erfindungsgemäßen Schuhwerks mit textilem Flächengebilde an Außenschicht ohne Laufsohle
- Fig. 5: Ansicht auf den Querschnitt B-B von Fig. 4 im Spitzenbereich des erfindungsgemäßen Schuhwerks
- Fig. 6: die Unteransicht des erfindungsgemäßen Schuhwerks mit textilem Flächengebilde an Außenschicht und Laminat ohne Laufsohle
- Fig. 7: Ansicht auf den Querschnitt C-C von Fig. 6 im Spitzenbereich des erfindungsgemäßen Schuhwerks
- Fig. 8: die Unteransicht des erfindungsgemäßen Schuhwerks mit textilem Flächengebilde an Außenschicht im Gelenkbereich ohne Laufsohle

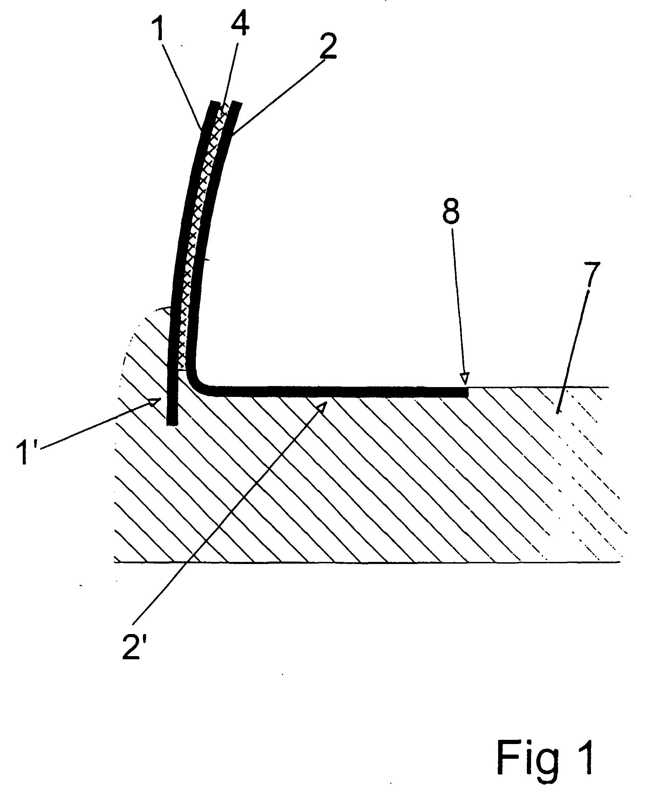

Nach Fig. 1 besteht das erfindungsgemäße Schuhwerk aus einer Wollfutterschicht und einer Außenschicht 1 aus genarbtem Rindsleder. Als Laminat 2 wird in allen Ausführungsbeispielen ein textiles Gewebe mit einer Stützschicht aus Polyester und einer wasserdichten wasserdampfdurchlässigen Membran verwendet, die Copolyetherester mit einer Vielzahl von wiederkehrenden intralinearen langkettigen und kurzkettigen Estereinheiten enthält, die statistisch über Esterbindungen Kopf an Schwanz verknüpft sind (Sympatex).

Die Außenschicht 1 ist mit dem Laminat 2 oberhalb des unteren Endbereichs 1' der Außenschicht 1 mittels eines, vorzugsweise wasserdampfdurchlässigen, Klebers 4 verklebt. Das Kunststoffsohlenmaterial aus Polyurethan wird, nachdem man den Schaft mit der Außenschicht 1 und dem Laminat 2 über den Leisten gezogen und die restliche unverdeckte Leistenoberfläche mit einem Trennmittel beschichtet hat, unter Druck und Hitze an den Leisten derart gespritzt, daß eine innige Verklebung zwischen der Laufsohle 7 mit dem unteren Endbereich 1' der Außenschicht 1 unter Bildung einer Dichtlippe und der der Unterseite der Laufsohle 7 zugewandten Seite (=Unterseite) des unteren Endbereichs 2' des Laminats 2 erfolgt. Dabei ist der Übergang 8 vom unteren Endbereich 2' des Laminats 2 zu der dem Schuhwerkinnenbereich zugewandten Oberfläche der Laufsohle 7 als stete Fläche ausgebildet.

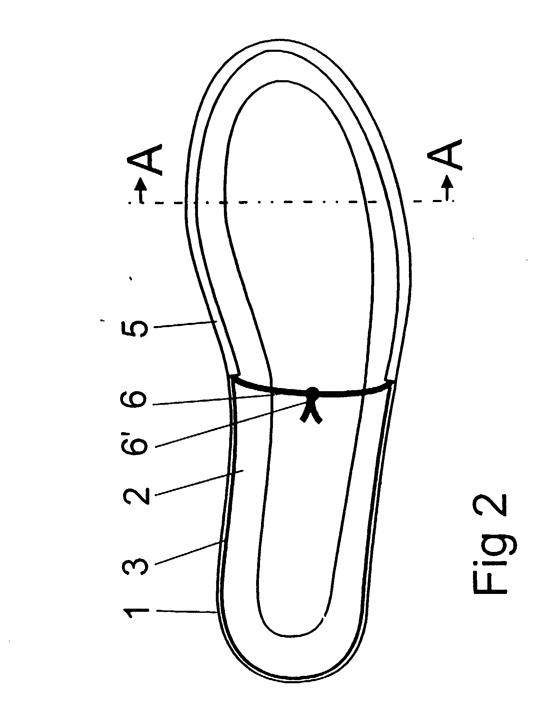

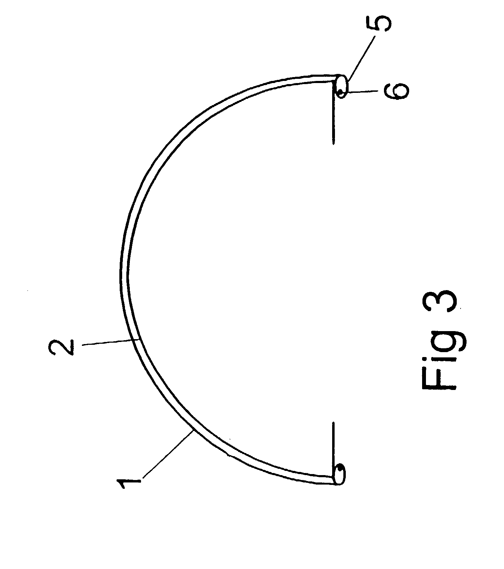

Nach Fig 2 und Fig. 3 ist der untere Endbereich der Außenschicht 1 zum Schuhwerkinnenbereich unter Bildung einer Führungschlaufe 5 zur Führung einer Zugschnur 6 umgeschlagen. Zwischen der Außenschicht 1 und dem Laminat 2 ist im umlaufenden Fersenbereich eine Hinterkappe 3 angeordnet zur zusätzlichen Versteifung des Hinterkappenbereichs des erfindungsgemäßen Schuhwerks. Nachdem der Schaft mit dem mit der Außenschicht 1 zumindest im unteren Bereich des Schuhwerks - also unter Einsparung eines Verklebungsschritts - unverklebten Laminat 2 über den Leisten gezogen worden ist, wird die Zugschnur 6 angezogen, deren Enden 6' zu einem unlösbaren Knoten verknotet, und mit Kunststoffsohlenmaterial angespritzt.

Die Wasserdichtigkeit des Schuhwerkinnenbereichs wird durch die innige und wasserdichte Verklebung der Unterseite und des Randbereichs des unteren Endbereichs 2' des Laminats 2 mit dem Kunststoffsohlenmaterial hinreichend gewährleistet.

Unter Randbereich wird hierbei der zur Sohlenlängsachse zugewandte Bereich des unteren Endbereichs 2' des Laminats 2 verstanden.

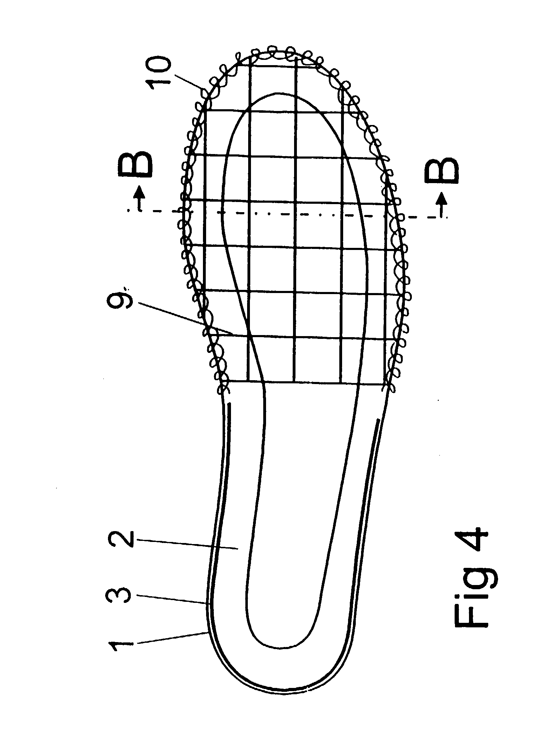

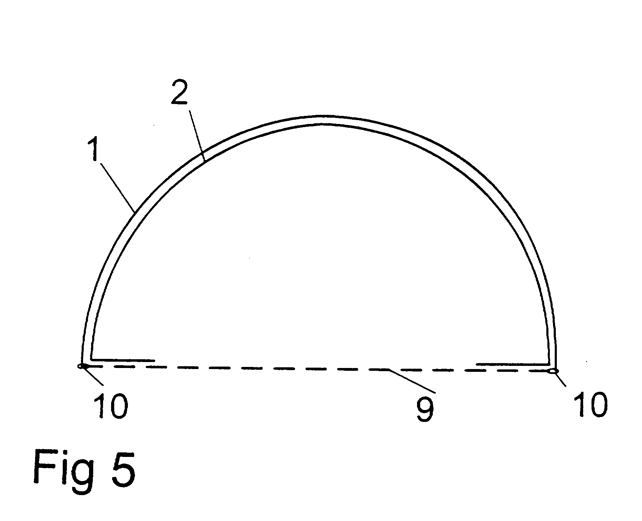

Nach Fig. 4 und Fig. 5 liegt an der zu dem Schuhwerkinnenbereich zugewandten Kante des unteren Endbereichs der Außenschicht 1 im Spitzenbereich ein textiles Flächengebilde 9 hier ein Gewebe aus Polyester an, welches mittels einer Naht 10 mit der Außenschicht 1 verbunden ist. Um die Seitenstabilität darüber hinaus zu erhöhen, ist ein weiteres textiles Flächengebilde 11 hier ein Gewebe aus Polyester an den Randbereich des unteren Endbereichs 2' des Laminats 2 mittels einer Naht 12 vernäht. Zur Stabilisierung kann ein solches textiles Flächengebilde 11, welches mit dem Endbereich 2' des Laminats 2 verbunden ist, auch bei den in den Fig. 1 bis Fig. 3 dargestellten Ausführungsformen eingesetzt werden.

Durch das Anspritzen des flüssigen Kunststoffsohlenmaterials dringt das Kunststoffsohlenmaterial durch das Gewebe, bildet eine der Oberfläche des Leisten angepaßte Oberseite aus und verklebt zudem innig mit dem Gewebe. Zur Erhöhung der Seitenstabilität des wasserdichten Schuhwerks beim Abrollvorgang sind Hinterkappen 3 aus dünnem aber formstabilem elastischem Leder zwischen der Außenschicht 1 und dem Laminat 2 eingenäht.

Es zeigt sich, daß bei den o.g. Ausführungsformen der Schuhwerkinnenbereich hinreichend gegen das Eindringen von Wasser auch bei häufigem Abrollen des Schuhwerks in wäßriger Umgebung abgedichtet ist, insbesondere dann, wenn als wasserdichtes wasserdampfdurchlässiges Material Polymere auf Copolyetherestergrundlage (Sympatex) Verwendung finden.

Zudem zeigt sich, daß durch das das zumindest an der Außenschicht 1 gekoppelte textile Flächengebilde 9 (Fig. 4, und Fig. 5) zusammen mit der als Fußbett ausgeformten Oberseite der Laufsohle 7 und des unteren Endbereichs 2' des Laminats 2 ein für den Benutzer angenehmes Tragegefühl ohne Einschränkung hervorgerufen wird.

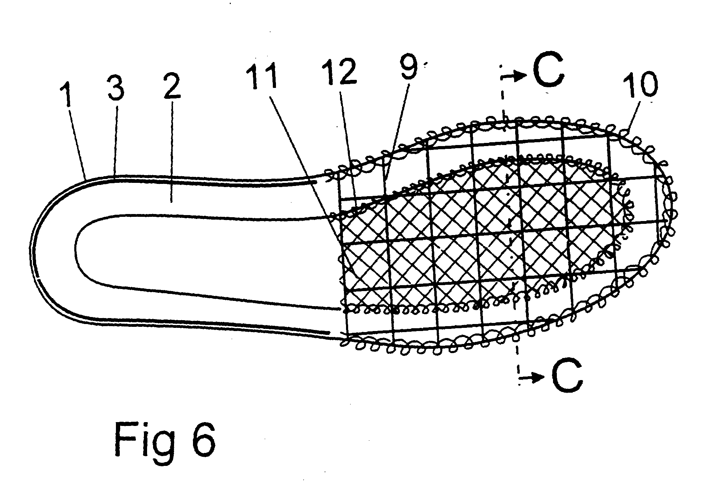

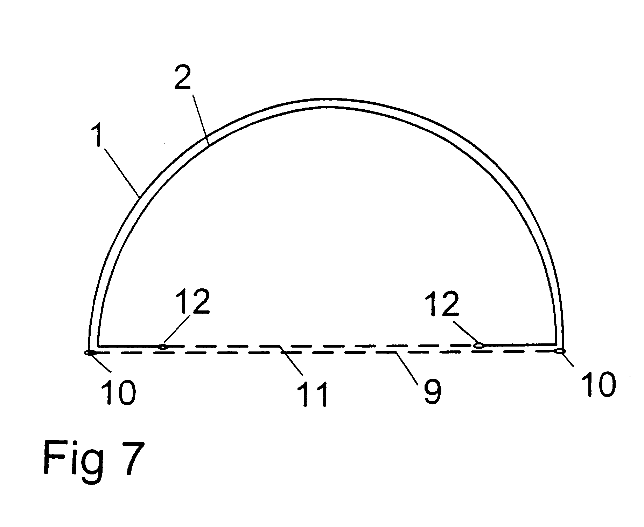

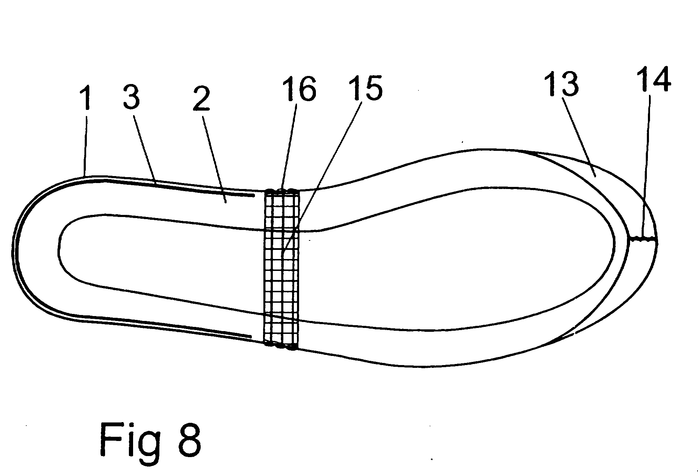

In einem weiteren Ausführungsbeispielen (Fig. 6 bis Fig. 8) ist der im wesentlichen senkrecht zu der Unterseite der Laufsohle 7 untere Endbereich 1' der Lederlage als Außenschicht 1 zumindest im Gelenkbereich mit einem Polyestergewebe 15 als textiles Flächengewebe mit Hilfe von Nähten 16 fest verbunden. Beim unter Druck Anspritzen des flüssigen Kunststoffsohlenmaterials wird das Polyestergewebe von demselben durchdrungen und es bildet sich eine dauerhafte, reißfeste und wasserdichte Verbindung zwischen der Lederlage als Außenschicht 1 und dem Laminat 2, so daß der Schuhwerkinnenbereich hermetisch gegenüber Eindringen von flüssigem Wasser abgeschottet ist. Der untere Endbereich 1' der Lederlage als Außenschicht 1 ist im Frontbereich zur Stabilisierung des Schaftes des erfindungsgemäßen Schuhwerks zum Schuhwerkinnenbereich umgeschlagen und mit der dem Schuhwerkinnenbereich zugewandten Seite des unteren Bereichs der Lederlage flächig anliegend verklebt. Die Kanten des in der Frontspitze gelegenen Ausschnitts 14 sind nach außen umgeschlagen und miteinander vernäht.

In allen Ausführungsbeispielen erweist sich das erfindungsgemäße Schuhwerk ausreichend wasserdicht und in hervorragender Weise geeignet, die Fußfeuchtigkeit vom Schuhwerkinnenbereich nach außen diffundieren zu lassen, so daß die durch Ansammlung von Feuchtigkeitsnestern häufig anzutreffenden Pilz- und Bakterienninfektionen nicht feststellbar sind.

## Patentansprüche

1. Wasserdichtes Schuhwerk mit Laminateinbettung mit einem Schaft zumindest aus einer Außenschicht (1) und einem auf der Innenseite der Außenschicht (1) angeordneten Laminat (2), das zumindest eine wasserdichte, wasserdampfdurchlässige Sperrschicht und eine Futterschicht enthält, sowie mit einer Laufsohle, (7), wobei zumindest ein Teil des unteren Endbereichs der Außenschicht (1) im wesentlichen senkrecht zu der Unterseite der Laufsohle (7), und der untere Endbereich (2') des Laminats (2) im wesentlichen parallel zu der Unterseite der Laufsohle (7) ausgerichtet ist, die zum Schuhwerkinnenbereich zugewandte Oberfläche des unteren Endbereichs (2') des Laminats (2) mit der zum Schuhwerkinnenbereich zugewandten, zu der Unterseite der Laufsohle (7) im wesentlichen parallelen Oberseite der Laufsohle (7) eine stete Fläche bildet und die Sperrschicht des Laminats (2) in dem zu der Unterseite der Laufsohle (7) im wesentlichen parallel ausgerichteten unteren Endbereich (2') des Laminats (2) und an der Endkante des Laminats (2) mit der Laufsohle (7) wasserdicht verbunden ist, wobei der untere Endbereich (1') der Außenschicht (1) mit dem Laminat (2) ausschließlich über die Laufsohle (7) verbunden ist.

2. Wasserdichtes Schuhwerk mit Laminateinbettung nach Anspruch 1, dadurch gekennzeichnet, daß das Schuhwerk eine angespritzte Laufsohle (7) aufweist, wobei die Außenschicht (1) in ihrem unteren Endbereich (1') Mittel zur Formgebung des unteren Bereichs der Außenschicht (1) im Bereich der Laufsohle (7) umfaßt, welches mit der Außenschicht (1) verbunden ist.

3. Wasserdichtes Schuhwerk mit Laminateinbettung nach Anspruch 2, dadurch gekennzeichnet, daß das Schuhwerk Mittel zur Formgebung im Spitzenbereich der Laufsohle (7), vorzugsweise im Frontbereich der Laufsohle (7), umfaßt.

4. Wasserdichtes Schuhwerk mit Laminateinbettung nach Anspruch 2 oder 3, dadurch gekennzeichnet, daß das Schuhwerk Mittel zur Formgebung im Gelenkbereich der Laufsohle (7) umfaßt.

5. Wasserdichtes Schuhwerk mit Laminateinbettung nach einem der Ansprüche 2 bis 4, dadurch gekennzeichnet, daß das Mittel zur Formgebung eine Verlängerung (13) ist.

6. Wasserdichtes Schuhwerk mit Laminateinbettung nach Anspruch 5, dadurch gekennzeichnet, daß die Verlängerung (13) der zum Schuhwerkinnenbereich umgeschlagene untere Endbereich (1') der Außenschicht (1) ist, welcher in der Frontspitze des Spitzenbereichs einen derartigen Ausschnitt (14) aufweist, daß die umgeschlagene Verlängerung (13) auf der dem Schuhwerkinnenbereich (13) zugewandten Seite des unteren Bereichs der Außenschicht (1) flächig anliegt.

7. Wasserdichtes Schuhwerk mit Laminateinbettung nach einem der Ansprüche 2 bis 6, dadurch gekennzeichnet, daß das Mittel zur Formgebung ein textiles Flächengebilde (9) umfaßt, welches von dem Kunststoffsohlenmaterial der Laufsohle (7) durchdrungen ist.

8. Wasserdichtes Schuhwerk mit Laminateinbettung nach einem der Ansprüche 2 bis 7 dadurch gekennzeichnet, daß das Mittel zur Formgebung eine Führungsschlaufe (5) mit einer Zugschnur (6) ist.

9. Wasserdichtes Schuhwerk mit Laminateinbettung nach Anspruch 8 dadurch gekennzeichnet, daß die Führungsschlaufe (5) eine Naht oder eine angenähte Schlaufe ist.

10. Wasserdichtes Schuhwerk mit Laminateinbettung nach An spruch 9, dadurch gekennzeichnet, daß die angenähte Schlaufe durch ein Umschlagen des unteren Endbereichs (1') der Außenschicht (1) ausgebildet ist.

## Claims

1. Waterproof shoe with embedded laminate, with a shoe upper comprising at least one outer layer (1) and a laminate (2) positioned against the inner side of the outer layer (1), which includes at least one waterproof, water-vapour permeable interlining and a lining, and with an outsole (7), where at least part of the lower area of the outer layer (1) is essentially perpendicular to the underside of the outsole, and the lower area (2') of the laminate (2) is essentially parallel with the underside of the outsole (7); the upper surface of the lower area (2') of the laminate (2) facing into the inner area of the shoe forms a continuous surface with the upper side of the outsole (7) facing into the inner area of the shoe and is essentially parallel with the underside of the outsole (7); the interlining of the laminate (2) is bonded to the outsole (7) in a waterproof manner in the lower area (2') of the laminate (2), - which is essentially parallel with the underside of the outsole (7), and at the extreme edge of the laminate (2); and the lower area (1') of the outer layer (1) is joined to the laminate (2) exclusively via the outsole (7).

2. Waterproof shoe with embedded laminate in accordance with claim 1, characterised by the shoe having a spray-moulded outsole (7), where the outer layer (1) includes means in its lower area (1') which are used for shaping the lower area of the outer layer (1) in the region of the outsole (7) and which are joined to the outer layer (1).

3. Waterproof shoe with embedded laminate in accordance with claim 2, characterised by the shoe including means used for shaping in the toe area of the outsole (7), preferably in the front area of the outsole (7).

4. Waterproof shoe with embedded laminate in accordance with claims 2 or 3, characterised by the shoe including means used for shaping in the shank area of the outsole (7).

5. Waterproof shoe with embedded laminate in accordance with one of claims 2 to 4, characterised by the means used for shaping being an extension (13).

6. Waterproof shoe with embedded laminate in accordance with claim 5, characterised by the extension (13) being the lower area (1') of the outer layer (1) which is turned back towards the inner area of the shoe and by the extension having a cutout (14) at the front tip of the toe area such that when the extension (13) is turned back it lies flat against the side of the lower area of the outer layer (1) facing into the inner area of the shoe.

7. Waterproof shoe with embedded laminate in accordance with one of claims 2 to 6, characterised by the means used for shaping comprising a flat textile structure (9) which is permeated by the synthetic material of the outsole (7).

8. Waterproof shoe with embedded laminate in accordance with one of claims 2 to 7, characterised by the means used for shaping being a guide loop (5) with a drawstring (6).

9. Waterproof shoe with embedded laminate in accordance with claim 8, characterised by the guide loop (5) being a seam or a loop which is sewn on.

10. Waterproof shoe with embedded laminate in accordance with claim 9, characterised by the sewn-on loop being formed by turning back the lower area (1') of the outer layer (1).

## Revendications

1. Chaussure étanche à l'eau à couche de produit stratifié encastrée comportant une tige formée d'au moins une couche extérieure (1) et d'un produit stratifié (2) disposé sur la face intérieure de la couche extérieure (1) lequel produit stratifié comprend au moins une couche formant barrage étanche à l'eau et perméable à la vapeur d'eau et une couche de doublure, ainsi qu'une semelle de marche (7), au moins une partie d'extrémité inférieure de la couche extérieure (1) étant dirigée essentiellement perpendiculairement à la face inférieure de la semelle de marche (7) et la partie d'extrémité inférieure (2') du produit stratifié étant dirigée essentiellement parallèlement à la face inférieure de la semelle de marche (7), la surface de la partie d'extrémité inférieure (2') du produit stratifié (2), tournée vers l'intérieur de la chaussure, formant une surface continue avec la face supérieure de la semelle de marche (7), tournée vers l'intérieur de la chaussure, essentiellement parallèle à face inférieure de la semelle de marche (7) et la couche formant barrage du produit stratifié (2), dans la partie d'extrémité inférieure (2') du produit stratifié (2) essentiellement parallèle à la face inférieure de la semelle de marche (7) et au niveau du bord extrême du produit stratifié (2), étant liée de manière étanche à l'eau à la semelle de marche (7), la partie d'extrémité inférieure (1') de la couche extérieure (1) étant liée au produit stratifié (2) exclusivement par la semelle de marche (7).

2. Chaussure étanche à l'eau à couche de produit stratifié encastrée selon la revendication 1, caractérisée par le fait que la chaussure comporte une semelle de marche (7) surmoulée, la couche extérieure (1), dans la partie d'extrémité inférieure (1') comportant un moyen de conformation de la partie d'extrémité de la couche extérieure (1) dans la région de la semelle de marche (7), qui est lié à la couche extérieure (1).

3. Chaussure étanche à l'eau à couche de produit stratifié encastrée selon la revendication 2, caractérisée par le fait que la chaussure comporte un moyen de conformation dans la région du bout de la semelle de marche (7), de préférence dans la région de l'avant de la semelle de marche (7).

4. Chaussure étanche à l'eau à couche de produit stratifié encastrée selon la revendication 2 ou 3, caractérisée par le fait que la chaussure comporte un moyen de conformation dans la région de l'articulation de la semelle de marche (7).

5. Chaussure étanche à l'eau à couche de produit stratifié encastrée selon une des revendications 2 à 4, caractérisée par le fait que le moyen de conformation est un prolongement (13).

6. Chaussure étanche à l'eau à couche de produit stratifié encastrée selon la revendication 5, caractérisée par le fait que le prolongement (13) est la partie d'extrémité inférieure (1') de la couche extérieure (1) repliée en direction de l'intérieur de la chaussure, laquelle, au niveau de la pointe avant de la région du bout, comporte une découpe (14) telle que le prolongement (13) replié repose à plat sur la face de la partie d'extrémité de la couche extérieure (1) tournée vers l'intérieur de la chaussure (13).

7. Chaussure étanche à l'eau à couche de produit stratifié encastrée selon une des revendications 2 à 6, caractérisée par le fait que le moyen de conformation comprend un produit textile (9) plat qui est traversé par la matière plastique de la semelle de marche (7).

8. Chaussure étanche à l'eau à couche de produit stratifié encastrée selon une des revendications 2 à 7, caractérisée par le fait que le moyen de conformation est une boucle de guidage (5) avec un cordon de traction (6).

9. Chaussure étanche à l'eau à couche de produit stratifié encastrée selon la revendication 8, caractérisée par le fait que la boucle de guidage (5) est une couture ou une boucle cousue.

10. Chaussure étanche à l'eau à couche de produit stratifié encastrée selon la revendication 9, caractérisée par le fait que la boucle cousue est formée par un pli de la partie d'extrémité inférieure (1') de la couche extérieure (1).
